# EUROPÄISCHE PATENTANMELDUNG

(11) **EP 1 634 490 A1**
(43) Veröffentlichungstag der Anmeldung: **15.03.2006**
(21) Anmeldenummer: 05107421.9
(22) Anmeldetag: 12.08.2005
(51) Int. Cl.: A01D 34/68

(54) **Sicherheitseinrichtung und Gerät**

(30) Priorität: 02.09.2004 DE 102004042931
(71) Anmelder: SABO-Maschinenfabrik GmbH, 51645 Gummersbach (DE)
(72) Erfinder: Viebahn, Knut, 51647, Gummersbach (DE); Hartmann, Dietmar, 51674, Wiehl (DE); Funke, Reiner, 51588, Nümbrecht (DE); Dzierzewski, Jürgen, 51674 Wiehl (DE); Olbrisch, Werner, 51766, Engelskirchen (DE); Budde, Hans-Helmut, 51674, Wiehl (DE); Steinhoff, Dietmar, 51647, Gummersbach (DE); Eggers, Günter, 51588, Nümbrecht (DE)
(74) Vertreter: Magin, Ludwig Bernhard

(57) **Zusammenfassung**

Geräte, insbesondere zur Rasen-, Garten- bzw. Grundstückspflege, weisen Sicherheitseinrichtungen auf, welche es erfordern, zwei voneinander unabhängige Bewegungen auszuführen, um den Motor des Geräts zu aktivieren und/oder um eine Arbeitseinrichtung bzw. einen Fahrantrieb des Geräts in Betrieb zu nehmen.

Es wird eine Sicherheitseinrichtung (30) eines Geräts (10), vorzugsweise zur Rasen-, Garten- bzw. Grundstückspflege, mit einem Führungsholm (22) und einem Motor (15), welche ein erstes Sicherheitselement (32) und ein zweites Sicherheitselement (40) aufweist, das sich in seiner betätigten Stellung befinden muss, damit das erste Sicherheitselement (32) einen Betrieb des Motors (15) und/oder einer mittels des Motors (15) antreibbaren Arbeitseinrichtung zulassen kann, mit einem ersten Übertragungsmittel (34), welches einenends mit dem ersten Sicherheitselement (32) und andernends mit einem ersten Koppelelement (44) verbunden ist und einem zweiten Übertragungsmittel (36), vorgeschlagen, welches einenends mit einem zweiten Koppelelement (46) verbunden ist und andernends derart auf den Motor (15) und/oder die Arbeitseinrichtung wirken kann, dass es einen Betrieb des Motors (15) und/oder der Arbeitseinrichtung selektiv zulässt, wobei das erste und das zweite Koppelelement (46) mittels des zweiten Sicherheitselements (40) derart verbindbar ist, dass das zweite Übertragungsmittel (36) einer Bewegung des ersten Übertragungsmittels (34) folgt. Darüber hinaus wird ein Gerät (10), insbesondere zur Rasen-, Garten- bzw. Grundstückspflege, mit einer solchen Sicherheitseinrichtung (30) vorgeschlagen.

## Beschreibung

Die Erfindung betrifft eine Sicherheitseinrichtung eines Geräts vorzugsweise zur Rasen-, Garten- bzw. Grundstückspflege mit einem Führungsholm und einem Motor, welche ein erstes Sicherheitselement und ein zweites Sicherheitselement aufweist, das sich in seiner betätigten Stellung befinden muss, damit das erste Sicherheitselement einen Betrieb des Motors und/oder einer mittels des Motors antreibbaren Arbeitseinrichtung zulassen kann, und ein Gerät, insbesondere zur Rasen-, Garten- bzw. Grundstückspflege.

Die WO-A2-02 32212 zeigt einen Rasenmäher mit einem Motor und einer Motorstarteinrichtung, welche eine Energiespeichereinheit zum Anlassen des Motors aufweist. An einem Führungsholm des Rasenmähers ist eine Sicherheitseinrichtung mit einem Motorbügel und einer Taste vorgesehen, welche mit dem Motor über ein Zug-Druck-Kabel derart zusammenwirken, dass der Motor nur dann durch die Wirkung der Energiespeichereinheit angelassen werden kann, wenn zuerst die Taste gedrückt und in ihrer gedrückten Stellung gehalten wird, um das Zug-Druck-Kabel mit dem Sicherheitsbügel zu verbinden, und im Anschluss der Sicherheitsbügel in seine betätigte Stellung an den Führungsholm verschwenkt wird.

Das der Erfindung zugrunde liegende Problem wird im aufwändigen Aufbau bekannter Sicherheitseinrichtungen sowie von Geräten, insbesondere zur Rasen-, Garten- bzw. Grundstückspflege, mit derartigen Sicherheitseinrichtungen gesehen.

Dieses Problem wird erfindungsgemäß durch die Lehre der Patentansprüche 1 bzw. 12 gelöst, wobei in den weiteren Patentansprüchen Merkmale aufgeführt sind, die die Lösung in vorteilhafter Weise weiterentwickeln.

Es wird eine Sicherheitseinrichtung eines Geräts, vorzugsweise zur Rasen-, Garten- bzw. Grundstückspflege, mit einem Führungsholm und einem Motor vorgeschlagen, welche ein erstes Sicherheitselement und ein zweites Sicherheitselement aufweist, das sich in seiner betätigten Stellung befinden muss, damit das erste Sicherheitselement einen Betrieb des Motors und/oder einer mittels des Motors antreibbaren Arbeitseinrichtung zulassen kann. Es ist ein erstes Übertragungsmittel, welches einenends mit dem ersten Sicherheitselement und andernends mit einem ersten Koppelelement verbunden ist, und ein zweites Übertragungsmittel vorgesehen, welches einenends mit einem zweiten Koppelelement verbunden ist und andernends derart auf den Motor wirken kann, dass es einen Betrieb des Motors und/oder einer Arbeitseinheit selektiv zulassen kann, wobei das erste und das zweite Koppelelement mittels des zweiten Sicherheitselement derart verbindbar ist, dass das zweite Übertragungsmittel einer Bewegung des ersten Übertragungsmittels folgt. Auf diese Weise wird in einfacher Art und Weise sichergestellt, dass eine Bedienungsperson zwei Sicherheitselemente in einer kontrollierten Reihenfolge betätigen muss, um einen Betrieb des Motors des Geräts und/oder einer Arbeitseinheit zu ermöglichen. Dies ist insbesondere hilfreich, wenn das Gerät eine Motorstarteinrichtung aufweist, welche das Gerät automatisch anlassen bzw. starten kann, ohne dass die Bedienungsperson einen weiteren, insbesondere manuell zu betätigenden Zuganlasser betätigen muss, um den Motor zu starten. Aus diesem Grund ist die vorgeschlagene Sicherheitseinrichtung besonders für Geräte mit derartigen Motorstarteinrichtungen geeignet, wie sie beispielsweise durch die EP-A-1 125 059 und die zu dieser Anmeldung korrespondierenden Anmeldungen gezeigt werden. Die Sicherheitseinrichtung kann aber auch alternativ oder zusätzlich einen Betrieb wenigstens einer Arbeitseinheit zulassen. Hierbei kann es sich beispielsweise um ein Mäh- oder Mulchmesser eines Rasenmähers, eine Kehreinrichtung, andere Schneid- oder Trenneinrichtungen oder jede andere geeignete, motorisch antreibbare Arbeitseinheit handeln. Die Arbeitseinheit kann aber auch durch ein antreibbares Rad bzw. den Fahrantrieb des Geräts gebildet werden. Die Arbeitseinheit kann zusammen mit dem Motor aktiviert werden oder die Sicherheitseinheit kann einen Betrieb der Arbeitseinheit selektiv in der Art zulassen, dass die Arbeitseinheit beispielsweise bei bereits laufendem Motor zugeschaltet bzw. abgeschaltet werden kann.

Wenigstens eines der Übertragungsmittel kann in der Art einer Stange ausgebildet sein. Insbesondere bei beengtem Bauraum oder wenn die einzelnen Bauteile, wie die Sicherheitselemente, die Koppelelemente etc. bzw. die Angriffspunkte der Übertragungsmittel an diesen Bauteilen nicht zumindest im Wesentlichen miteinander fluchten, ist es vorteilhaft, wenigstens eines der Übertragungsmittel als ein oder in der Art eines Zug-Druck-Kabels auszubilden. Die Übertragungsmittel können gleichartig oder auch unterschiedlich, beispielsweise als eine Stange und ein Zug-Druck-Kabel ausgebildet werden. Weiter oder alternativ ist es denkbar, dass wenigstens eines der Übertragungsmittel hydraulisch und/oder pneumatisch betätigbar ist bzw. wenigstens ein hydraulisch/pneumatisch betätigbares Element, beispielsweise einen Hydraulik-/Pneumatikmotor bzw. -zylinder aufweist.

Es ist denkbar, die Koppelelemente an dem Führungsholm oder zumindest im Wesentlichen frei an dem Gerät vorzusehen. Vorzugsweise sind sie aber in einem gemeinsamen Gehäuse vorgesehen, so dass sie durch dieses sowohl vor Umwelteinflüssen geschützt sind, als auch gemeinsam (de-)montiert werden können.

Ist wenigstens eines der Koppelelemente bezogen auf den Führungsholm bzw. auf das Gehäuse und/oder in dem Gehäuse beweglich vorgesehen, so kann es einer Bewegung des jeweiligen bzw. der Übertragungsmittel folgen und/oder eine derartige Bewegung ausführen, dass es mit dem weiteren Koppelelement in Eingriff gebracht und/oder verbunden werden kann. Insbesondere ist wenigstens eines der Übertragungsmittel verschiebbar vorgesehen, so dass es einer translatorischen Bewegung des/der Übertragungsmittel folgen bzw. eine solche weitergeben kann.

Weist wenigstens eines der Koppelelemente einen Verbindungsteil auf, welcher in das zweite Koppelelement eingreifen oder an diesem angreifen kann, so kann dieser Verbindungsteil die Koppelelemente miteinander verbinden, so dass sie sich gemeinsam bewegen bzw. insbesondere gemeinsam verschoben werden können. Das weitere Koppelelement kann einen entsprechenden Verbindungsteil aufweisen, der derart ausgebildet ist, dass der erste Verbindungsteil in diesen ein- oder an diesem angreifen bzw. mit diesem zusammenwirken kann, um eine Verbindung zwischen den Koppelelementen herzustellen.

Es ist denkbar, dass die Verbindungselemente derart, insbesondere elastisch verformbar ausgebildet sind, dass sie bei einem Aufeinandertreffen unter vorgegebener Krafteinwirkung miteinander verbindbar sind. Eine einfache und sichere Verbindung ergibt sich aber insbesondere dann, wenn wenigstens einer der Verbindungsteile beweglich und/der verschwenkbar ausgebildet ist.

Das erste Sicherheitselement kann in einfacher Weise in der Art einer Griffeinrichtung und/oder eines Bügels, insbesondere eines bekannten Motorbremsbügels ausgebildet sein, der an dem Führungsholm insbesondere derart verschiebbar oder verschwenkbar vorgesehen ist, dass er in einer durch eine Bedienungsperson betätigten Stellung an dem Führungsholm bzw. einem Griff- oder Endbereich des Führungsholms angrenzt bzw. anliegt und durch die Bedienungsperson bequem und einfach in dieser Stellung gehalten werden kann. Das Sicherheitselement kann aber auch als ein Druckknopf, als ein druckempfindlicher Griffbereich oder in jeder anderen Art und Weise ausgeführt sein, die geeignet ist, festzustellen, dass eine Bedienungsperson den Führungsholm des Geräts erfasst hat. Derartige Einrichtungen werden häufig als Totmann-Einrichtungen bezeichnet.

Wirkt das zweite Sicherheitselement direkt oder indirekt auf eines der Koppelelemente bzw. einen der Verbindungsteile, so kann das zweite Sicherheitselements beispielsweise die Stellung des Koppelelements bzw. des Verbindungsteils und/oder die Stellung der Koppeelemente bzw. der Verbindungsteile zueinander bestimmen. Vorzugsweise wirkt das zweite Sicherheitselement aber derart auf einen der Verbindungsteile, dass er durch die Wirkung und/oder Bewegung des Sicherheitselements in Eingriff mit dem zweiten Verbindungsteil bzw. dem weiteren Koppelelement gebracht werden kann.

Auch das zweite Sicherheitselement kann in der Art eines insbesondere verschiebbaren oder verschenkbaren Griffs oder Bügels bzw. entsprechend dem ersten Sicherheitselement ausgebildet werden. Ist das zweite Sicherheitselement aber ein Druckknopf bzw. ein Taster, so muss die Bedienungsperson zwei unterschiedliche und somit kontrollierte Bewegungen ausführen, um die Sicherheitselemente zu betätigen. Darüber hinaus kann ein Druckknopf und/oder Taster in einfacher Art und Weise ausgeführt werden bzw. mit dem/den Koppelelement(en) bzw. dem/den Verbindungsteil(en) zusammenwirken.

Ist wenigstens eines der Sicherheitselemente bzw. sind vorzugsweise beide Sicherheitselements in Richtung seiner/ihrer unbetätigten Stellung direkt oder indirekt vorgespannt bzw. federbelastet, so wird sichergestellt, dass die Sicherheitselemente ihre unbetätigte Stellung selbsttätig einnehmen, wenn sie nicht durch eine Bedienungsperson betätigt oder durch anderweitige Einrichtungen bzw. Mittel in ihrer betätigten Stellung gehalten werden.

Um sicherzustellen, dass die Koppelteile durch den Verbindungsteil bzw. die Verbindungsteile nicht ungewollt verbunden werden/sind, kann vorgesehen sein, dass wenigstens einer der Verbindungsteile in Richtung seiner unbetätigten Stellung federbelastet bzw. vorgespannt ist, in der die Koppelelemente nicht verbunden sind, und/oder zumindest bereichsweise elastisch ausgebildet ist, so dass er aufgrund der ihm inne wohnenden Elastizität in seine, vorzugsweise unbetätigte, Ausgangs- oder Ruhestellung zurückkehren kann.

Eine erfindungsgemäße Sicherheitseinrichtung kann insbesondere an Geräten Verwendung finden, welche einen Führungsholm und einen Motor aufweisen. Bei derartigen Geräten bzw. insbesondere bei Geräten zur Rasen-, Garten- bzw. Grundstückspflege kann es sich beispielsweise um einen Rasenmäher, einen Vertikutierer, eine Kehrmaschine, ein Reinigungsgerät oder ein anderes handgeführtes, selbstfahrendes oder auch handgeschobenes Gerät handeln, welches in der Rasen-, Garten- bzw. Grundstückspflege oder auch im industriellen, privaten oder landwirtschaftlichen Bereich eingesetzt wird.

Der Motor kann beispielsweise bei einem handgeführten Gerät eines oder mehrere Räder des Geräts antreiben, so dass dieses selbstfahrend ausgebildet ist. Der Motor kann hierbei dauerhaft mit dem Rad bzw. den Rädern in Verbindung stehen.

Vorzugsweise weist das Gerät aber eine Kupplungseinrichtung auf, welche den Motor mit dem Rad/den Rad selektiv in eine wirksame Verbindung bringen kann. Dies kann beispielsweise in Abhängigkeit von einer Fahrantriebsschalteinrichtung erfolgen, welche insbesondere in der Art eines durch eine Bedienungsperson betätigbaren Fahrantriebsschaltbügel o.ä. ausgebildet sein kann. Der Motor kann darüber hinaus oder alternativ dazu, eine Arbeitseinrichtung oder auch mehrere Arbeitseinrichtungen des Geräts dauerhaft oder ebenfalls selektiv antreiben. Bei der Arbeitseinrichtung kann es sich beispielsweise um eine Schneid- oder Trenneinrichtung, in der Art eines Mäh- oder Mulchmessers, ein Gebläse, eine Reinigungseinrichtung, beispielsweise eine Kehreinrichtung oder-bürste, oder um jedes andere geeignete Werkzeug etc. handeln.

Bei dem Motor kann es sich um einen Elektromotor oder jeden anderen geeigneten Motor handeln. Insbesondere ist der Motor aber in der Art eines Verbrennungsmotor ausgebildet.

Elektromotoren werden üblicherweise dadurch angelassen, dass sie mittels einer Motorstarteinrichtung in der Art eines Schalters mit einer Stromquelle bzw. der Stromzufuhr verbunden werden. Verbrennungsmotoren können beispielsweise mittels einer Motorstarteinrichtung in der Art eines Elektrostarters oder auch eines mechanischen bzw. manuellen Anlassers, insbesondere eines Zuganlassers gestartet werden. Eine derartige Motorstarteinrichtung kann vorzugsweise mit der Sicherheitseinrichtung derart zusammenwirken, dass die Motorstarteinrichtung den Motor startet bzw. anlässt, wenn die Sicherheitseinrichtung einen Betrieb des Motors zulässt. Auf diese Weise kann der Motor unter oder mittels Betätigung der Sicherheitseinrichtung automatisch angelassen werden.

Hierzu kann die Motorstarteinrichtung eine Energiespeichereinrichtung aufweisen, welche die Energie zum Anlassen des Motors liefern kann. Bei der Energiespeichereinheit kann es sich beispielsweise um eine Batterie oder einen Akkumulator handeln, welcher elektrische Energie zum Anlassen des Motors bereitstellen kann. Die Energiespeichereinrichtung kann aber dazu geeignet ausgebildet sein, Energie in anderer Form, beispielsweise mechanisch, zu speichern.

Insbesondere weist die Energiespeichereinheit ein elastisches Verformungselement auf und/oder ist als ein solches ausgebildet, welches dazu geeignet ist, Energie zu speichern. Bei einem derartigen Verformungselement handelt es sich insbesondere um eine Feder. In das elastische Verformungselement kann Energie beispielsweise manuell durch eine Bedienungsperson eingebracht werden. Das Verformungselement würde dann in seiner verformten Stellung gesichert und würde die Energie nach einem Freigeben, insbesondere wenn der Betrieb des Motors durch die Sicherheitseinrichtung zugelassen wird, zu einem Anlassen des Motors freigeben. Das Verformungselement kann aber auch durch den Motor selbst, beispielsweise während eines Betriebs oder auch zur Energieabsorption bzw. zum Abbremsen des Motors bei einer Deaktivierung desselben bzw. beim Abschalten des Motors gespannt, und entsprechend zum Anlassen des Motors verwendet werden, wenn die Sicherheitseinrichtung einen Betrieb des Motors zulässt. Bezüglich einer derartigen Motorstarteinrichtung wird wiederum auf die EP-A-1 125 059 sowie die zu dieser korrespondierenden Patentanmeldungen verwiesen.

In der Zeichnung ist ein nachfolgend näher beschriebene Ausführungsbeispiel der Erfindung dargestellt. Es zeigt:
- Fig. 1: eine Seitenansicht eines Geräts mit einer Sicherheitseinrichtung und
- Fig. 2: eine vergrößerte, schematische Darstellung der Sicherheitseinrichtung.

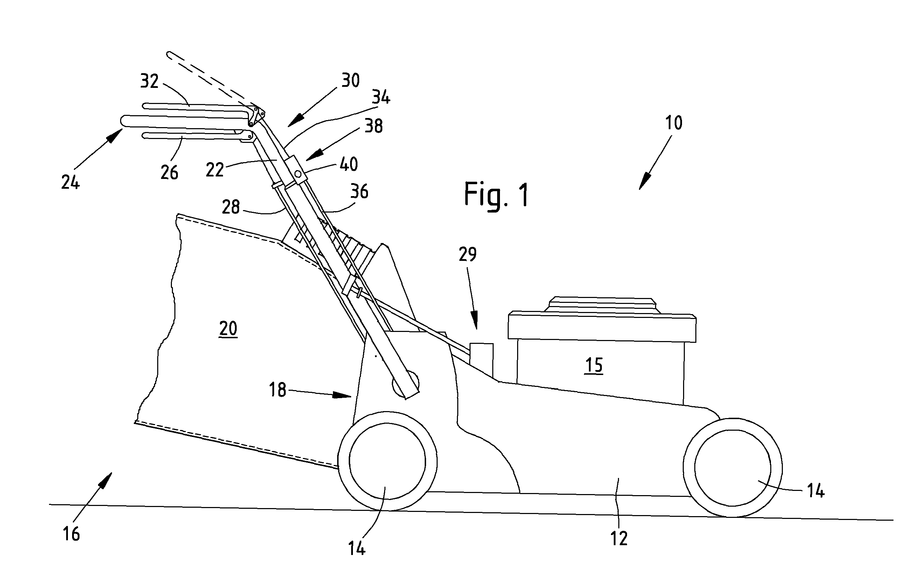

Es wird zuerst auf Figur 1 Bezug genommen, in der ein Mähgerät bzw. ein Gerät 10 in der Art eines handgeführten bzw. selbstfahrenden Rasenmähers in einer Betriebsstellung gezeigt wird. Das Gerät 10 weist ein Gehäuse 12 auf, das sich über zwei vordere und zwei rückwärtige, antreibbare Räder 14 auf dem Untergrund abstützt. An dem Gehäuse 12 ist ein nur andeutungsweise dargestellter Motor 15 vorgesehen, um ein oder mehrere unterhalb des Gehäuses 12 angebrachte Mähmesser oder Arbeitseinrichtungen, beispielsweise in der Art von Sichelmessern oder auch von Spindelmessern, in Rotation zu versetzen, um Gras bzw. Pflanzenwuchs zu schneiden.

Das Gehäuse 12 weist in einem bezogen auf die übliche Betriebsrichtung des Geräts 10 rückwärtigen Bereich 16 eine nur andeutungsweise dargestellte Auswurföffnung 18 auf, über die abgeschnittene Pflanzenabschnitte das Gehäuse 12 verlassen können. Angrenzend an die Auswurföffnung 18 ist ein Fangsack 20 lösbar an dem Gehäuse 12 angebracht, um die Pflanzenabschnitte zu sammeln.

Ebenfalls in dem rückwärtigen Bereich 16 ist an dem Gehäuse 12 ein Führungsholm 22 vorgesehen. Dieser Führungsholm 22 ist in seinem im Betrieb einer Bedienungsperson zugewandten Endbereich 24 in der Art eines Griffs ausgebildet.

In diesem Endbereich ist ein Fahrantriebsschaltelement 26 vorgesehen, das in der Art eines mit dem Führungsholm 22 schwenkbar verbundenen Bügels ausgebildet ist, und welches über ein Zug-Druck-Kabel 28 mit einem nicht dargestellten Getriebe des Geräts 10 derart verbunden ist, dass es eine wirksame Antriebsverbindung zwischen dem Motor 15 und einem oder mehreren der Räder 14 beispielsweise über ein Getriebe, insbesondere ein Riemengetriebe, herstellen kann.

Der Motor 15 ist in der Art eines Verbrennungsmotors ausgebildet, der mittels einer Motorstarteinrichtung 29 angelassen werden kann, wie sie durch die EP-A-1 125 059 beschrieben wird, welche durch Bezugnahme in die vorliegende Anmeldung einbezogen wird.

An dem Führungsholm 22 ist darüber hinaus eine Sicherheitseinrichtung 30 vorgesehen, welche ein erstes Sicherheitselement 32, das in der Art eines mit dem Endbereich 24 des Führungsholms 22 schwenkbar verbundenen Motorbremsbügels ausgebildet ist, ein erstes Übertragungsmittel 34, ein zweites Übertragungsmittel 36 und einen Sicherheitszusammenbau 38 mit einem zweiten Sicherheitsmittel 40 aufweist.

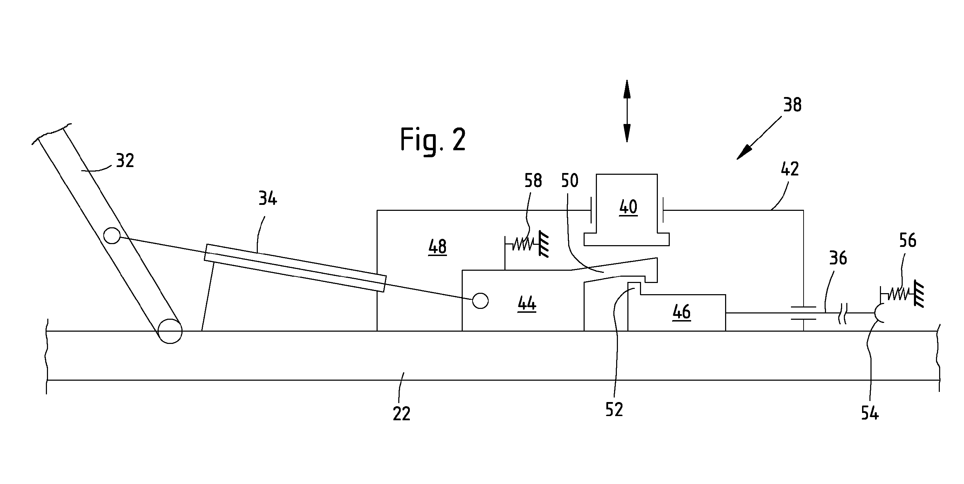

Das zweite Übertragungsmittel 36 wirkt direkt oder indirekt mit einer Motorbremseinrichtung (54, siehe Figur 2) zusammen, welche einen Betrieb des Motors 15 zulassen oder unterbinden kann, wie dies im Folgenden noch genauer beschrieben wird.

Es wird nun auch auf Figur 2 Bezug genommen aus der hervorgeht, dass der Sicherheitszusammenbau 38, neben dem zweiten Sicherheitselement 40, ein Gehäuse 42, sowie eine erstes und ein zweites Koppelelement 44, 46 aufweist.

Das zweite Sicherheitselement 40 ist in der Art eines Druckknopfes oder Tasters ausgebildet, welcher in dem Gehäuse 42 derart angeordnet ist, dass er durch eine Bedienungsperson teilweise in das Gehäuse 42 hineingedrückt werden kann, um mit den Koppelelementen 44, 46 zusammenzuwirken.

Das erste Koppelelement 44 und das zweite Koppelelement 46 sind im Inneren 50 des Gehäuses 42 bezogen auf dessen Längserstreckung bzw. bezogen auf die Längserstreckung des Führungsholms 22 verschiebbar angeordnet und in dem Gehäuseinneren 48 in geeigneter Art und Weise geführt.

Das erste Koppelelement 44 weist auf seiner dem zweiten Koppelelement 46 zugewandten Seite einen Verbindungsteil 50 auf, welcher in der Art eines hakenförmigen Elements ausgebildet ist, und ist auf seiner gegenüberliegenden Seite mittels des ersten Übertragungsmittels 34 mit dem ersten Sicherheitsmittel 32 derart verbunden, dass eine Schwenkbewegung des ersten Sicherheitsmittel 32 bewirkt, dass das erste Koppelelement 44 in dem Gehäuse in Richtung seiner Längserstreckung verschoben wird. Das zweite Koppelelement 46 weist auf seiner dem ersten Koppelelement 44 zugewandten Seite in einem oberen Kantenbereich eine im Wesentlichen nach oben gerichtete Nase, einen Vorsprung bzw. einen zweiten Verbindungsteil 52 auf, und ist an seiner gegenüberliegenden Seite mit dem zweiten Übertragungsmittel 36 derart verbunden, dass dieses eine Verschiebebewegung des zweiten Koppelelements 46 übertragen kann.

Der Verbindungsteil 50 des ersten Koppelelements 44 ist gemäß dem vorliegenden Ausführungsbeilspiel elastisch ausgebildet und kann mit dem zweiten Sicherheitselement 40 derart zusammenwirken, dass er durch dieses, wenn es durch eine Bedienungsperson betätigt, d.h. in das Gehäuseinnere 48 hineingedrückt wird, nach unten verschwenkt wird, so dass er in den zweiten Verbindungsteil 52 des zweiten Koppelelements 46 eingreifen kann, wenn das erste Koppelelement 44 sich in seiner in Figur 2 gezeigten Stellung befindet, die es einnimmt, wenn das erste Sicherheitselement 32 unbetätigt, d.h. nicht an den Endbereich 24 herangeschwenkt ist. Die Koppelelemente 44, 46 sind nun derart verbunden, dass das zweite Koppelelement 46 der Bewegung des ersten Koppelelements 44 folgen kann, wenn das erste Sicherheitselement 32 bei betätigtem zweiten Sicherheitselement 40 in Richtung des Endbereichs 24 verschwenkt bzw. betätigt wird, in dem Gehäuseinneren 48 durch die Wirkung des Übertragungsmittels 34 verschoben wird. Das zweite Koppelelement 46 wirkt nun mit dem zweiten Übertragungsmittel 36 derart zusammen, dass dieses die Motorbremse 54, üblicherweise gegen die Wirkung einer Feder 56 oder allgemein eine Vorspannung, löst.

Die Bedienungsperson kann nun das zweite Sicherheitselement freigeben, da die Verbindungsteile 44, 46 aufgrund der in der Sicherheitseinrichtung aufgrund der Wirkung gegen die Feder 56 herrschenden Belastung in Eingriff bleiben solange das erste Sicherheitselement 32 betätigt ist. Gibt die Bedienungsperson das erste Sicherheitselement 32 frei, wird es aufgrund seiner Vorspannung bzw. einer Belastung des ersten Verbindungselements 44 durch eine nur schematisch dargestellte Feder 58 von dem Endbereich 24 des Führungsholms 22 weg verschwenken und das erste Koppelelement 44 wird seine in Figur 2 gezeigte Stellung einnehmen. Das zweite Koppelelement 46 wird durch die Wirkung der Feder 56 in seine in Figur 2 gezeigte Stellung gebracht und die Motorbremse 54 unterbindet einen Betrieb des Motors 15. Darüber hinaus geben die Verbindungsteile 50, 52 die Verbindung zwischen den Koppelelementen 44, 46 frei und der erste Verbindungsteil 50 nimmt aufgrund der ihm inne wohnenden Elastizität wieder seine in Figur 2 gezeigte Ruhestellung ein, in der er nicht an dem zweiten Verbindungsteil 52 an- bzw. in diesen eingreift.

Wird das zweite Sicherheitselement 40 hingegen betätigt und somit der erste Verbindungsteil 50 verschwenkt, ohne dass sich das erste Sicherheitselement 32 in seiner betätigten, an den Endbereich 24 heran geschwenkten Stellung und das erste Koppelelement 44 sich in seiner bezogen auf die Darstellung in Figur 2 nach links verschobenen, nicht gezeigten Stellung befindet, so greift der erste Verbindungsteil 50 nicht in den zweiten Verbindungsteil 52 ein und die Koppelelemente 44, 46 werden nicht gekoppelt bzw. verbunden. Das zweite Koppelelement 46 folgt einer von dem ersten Sicherheitsmittel 32 initiierten Bewegung des ersten Koppelelements nicht und die Motorbremse 56 wird somit nicht gelöst und unterbindet weiterhin einen Betrieb des Motors 15.

Auf diese Weise wird sichergestellt, dass durch eine Bedienungsperson zwei voneinander unabhängige, kontrollierte Bewegungen, nämlich zuerst eine Betätigung des zweiten Sicherheitselement 40 und im Anschluss ein Verschwenken des ersten Sicherheitselements 32 durchgeführt werde müssen, um den Motor 15 anzulassen, auch wenn dieser durch die Motorstarteinrichtung 29 ohne eine Betätigung eines manuellen Zuganlassers gestartet werden kann.

## Patentansprüche

1. Sicherheitseinrichtung (30) eines Geräts (10), vorzugsweise zur Rasen-, Garten- bzw. Grundstückspflege, mit einem Führungsholm und einem Motor (15), welche ein erstes Sicherheitselement (32) und ein zweites Sicherheitselement (40) aufweist, das sich in seiner betätigten Stellung befinden muss, damit das erste Sicherheitselement (32) einen Betrieb des Motors (15) und/oder einer mittels des Motors (15) antreibbaren Arbeitseinrichtung zulassen kann, **gekennzeichnet durch** ein erstes Übertragungsmittel (34), welches einenends mit dem ersten Sicherheitselement (32) und andernends mit einem ersten Koppelelement (44) verbunden ist und einem zweiten Übertragungsmittel (36), welches einenends mit einem zweiten Koppelelement (46) verbunden ist und andernends derart auf den Motor (15) und/oder die Arbeitseinrichtung wirken kann, dass es einen Betrieb des Motors (15) und/oder der Arbeitseinrichtung selektiv zulassen kann, wobei das erste und das zweite Koppelelement (44, 46) mittels des zweiten Sicherheitselements (40) derart verbindbar ist, dass das zweite Übertragungsmittel (36) einer Bewegung des ersten Übertragungsmittels (34) folgt.

2. Sicherheitseinrichtung nach Anspruch 1, **dadurch gekennzeichnet, dass** wenigstens eines der Übertragungsmittel (34, 36) in der Art eines Zug-Druck-Kabels ausgebildet ist.

3. Sicherheitseinrichtung nach Anspruch 1 oder 2, **dadurch gekennzeichnet, dass** die Koppelelemente (44, 46) in einem gemeinsamen Gehäuse (42) angeordnet sind.

4. Sicherheitseinrichtung nach einem oder mehreren der vorherigen Ansprüche, **dadurch gekennzeichnet, dass** wenigstens eines der Koppelelemente (44, 46), insbesondere bezogen auf den Führungsholm (22) bzw. auf des Gehäuse (42) und/oder in dem Gehäuse (42), beweglich, insbesondere verschiebbar, vorgesehen ist.

5. Sicherheitseinrichtung nach einem oder mehreren der vorherigen Ansprüche, **dadurch gekennzeichnet, dass** wenigstens eines der Koppelelemente (44, 46) einen Verbindungsteil (50, 52) aufweist, welcher in/an das zweite Koppelelement (44, 46) und/oder einen entsprechenden Verbindungsteil (50, 52) des weiteren Koppelelements (44, 46) ein-/angreift.

6. Sicherheitseinrichtung nach Anspruch 5, **dadurch gekennzeichnet, dass** wenigstens einer der Verbindungsteile (50, 52) beweglich und/oder verschwenkbar ausgebildet ist.

7. Sicherheitseinrichtung nach einem oder mehreren der vorherigen Ansprüche, **dadurch gekennzeichnet, dass** das erste Sicherheitselement (32) an dem Gerät und/oder dem Führungsholm (22) direkt oder indirekt verschiebbar oder verschwenkbar vorgesehen ist.

8. Sicherheitseinrichtung nach einem oder mehreren der vorherigen Ansprüche, **dadurch gekennzeichnet, dass** das zweite Sicherheitselement (40) direkt oder indirekt auf eines der Koppelelemente (44, 46) bzw. einen der Verbindungsteile (50, 52) wirkt.

9. Sicherheitseinrichtung nach einem oder mehreren der vorherigen Ansprüche, **dadurch gekennzeichnet, dass** das zweite Sicherheitselement (40) in der Art eines Druckknopfes bzw. eines Tasters ausgebildet ist.

10. Sicherheitseinrichtung nach einem oder mehreren der vorherigen Ansprüche, **dadurch gekennzeichnet, dass** zumindest eines der Sicherheitselemente (32, 40) in Richtung seiner unbetätigten Stellung direkt oder indirekt vorgespannt bzw. federbelastet ist.

11. Sicherheitseinrichtung nach einem oder mehreren der Ansprüche 5 bis 10, **dadurch gekennzeichnet, dass** wenigstens einer der Verbindungsteile (50, 52) in Richtung seiner Stellung federbelastet bzw. vorgespannt ist, in der die Koppelelemente (44, 46) nicht verbunden sind, und/oder zumindest bereichsweise flexibel und/oder elastisch ausgebildet ist.

12. Gerät (10), vorzugsweise zur Rasen-, Garten- bzw. Grundstückspflege, mit einem Führungsholm (22), einem Motor (15) und einer Sicherheitseinrichtung nach einem oder mehreren der vorherigen Ansprüche.

13. Gerät nach Anspruch 12, **dadurch gekennzeichnet, dass** mittels des Motors (15) wenigstens ein Antriebsrad (14) des Geräts (10) und/oder wenigstens eine Arbeitseinrichtung antreibbar ist.

14. Gerät nach Anspruch 12 oder 13, **dadurch gekennzeichnet, dass** der Motor (15) in der Art eines Verbrennungsmotors ausgebildet ist.

15. Gerät nach einem oder mehreren der Ansprüche 12 bis 14, **gekennzeichnet durch** eine Motorstarteinrichtung (29), welche den Motor (15) startet, wenn die Sicherheitseinrichtung (30) einen Betrieb des Motors zulässt.

16. Gerät nach Anspruch 14, **dadurch gekennzeichnet, dass** die Motorstarteinrichtung eine Energiespeichereinrichtung aufweist, welche die Energie zum Anlassen des Motors liefern kann.

17. Gerät nach Anspruch 16, **dadurch gekennzeichnet, dass** die Energiespeichereinheit ein elastisches Verformungselement aufweist und/oder als ein derartiges ausgebildet ist.
